Europäisches Patentamt

European Patent Office

Office européen des brevets

(19)

(11) Numéro de publication: **0 216 701**
**A1**

(12) **DEMANDE DE BREVET EUROPEEN**

(21) Numéro de dépôt: **86402043.3**

(22) Date de dépôt: **18.09.86**

(51) Int. Cl.⁴: **B 65 G 49/06**
**C 03 B 35/20**

(30) Priorité: 18.09.85 FR 8513802

(43) Date de publication de la demande:
**01.04.87** Bulletin **87/14**

(84) États contractants désignés:
**CH DE FR GB IT LI SE**

(71) Demandeur: **SAINT-GOBAIN VITRAGE**
**Les Miroirs 18, avenue d'Alsace**
**F-92400 Courbevoie(FR)**

(72) Inventeur: **Petitcollin, Jean-Marc**
**12, rue de Verdun Le Plessis Brion**
**F-60150 Thourotte(FR)**

(72) Inventeur: **Perin, Francis**
**6, rue Pasteur Margny les Compiègne**
**F-60200 Compiègne(FR)**

(74) Mandataire: **Leconte, Jean-Gérard et al,**
**Saint-Gobain Recherche 39, Quai Lucien Lefranc**
**F-93304 Aubervilliers Cedex(FR)**

(54) **Dispositif de préhension et de transfert des feuilles de verre après leur trempe thermique.**

(57) L'invention concerne la production de feuilles de verre profilées trempées utilisées notamment dans les véhicules automobiles.

On propose un dispositif de préhension et de transfert de feuilles de verre bombées-trempées qui permet de saisir les feuilles de verre du squelette de trempe immédiatement après la trempe et de les transporter à un poste de refroidissement. Ce dispositif comporte essentiellement un caisson d'aspiration (10, 16), des moyens (11, 22) aptes à créer une dépression dans ledit caisson (10, 16), un fond (12, 17) rigide, métallique contre lequel vient s'appliquer le vitrage aspiré et des moyens qui confèrent au caisson des mouvements de translation et/ou de rotation.

FIG-2b

EP 0 216 701 A1

## DISPOSITIF DE PREHENSION ET DE TRANSFERT DES FEUILLES

## DE VERRE PARES LEUR TREMPE THERMIQUE

L'invention concerne la fabrication de feuilles de verre bombées trempées, utilisées notamment dans des véhicules automobiles en tant que pare-brise, glaces latérales, glaces arrières ou encore en tant que toits ouvrants. Plus précisément, l'invention est relative à un dispositif pour la préhension des feuilles de verre trempées à partir d'un squelette de trempe et leur transfert jusqu'à un poste de refroidissement.

Il est connu de fabriquer de tels vitrages automobiles dans des installations en ligne comportant successivement un four de chauffage horizontal, une cellule de bombage du verre et un dispositif de trempe sur cadre ou squelette des feuilles précédemment bombées. Dans de telles installations connues par exemple du brevet EP 0 003 391, les feuilles de verre sont chargées une à une dans le four et convoyées au travers de celui-ci, par exemple par un lit de rouleaux qui se prolonge jusque dans la cellule de bombage. Dans celle-ci, la feuille de verre échauffée au-delà de son point de ramollissement est soulevée au-dessus du convoyeur puis bombée. Comme décrit par la suite la feuille bombée est ensuite déposée sur un squelette et acheminée vers un dispositif de trempe.

De telles installations de formage et de trempe sont largement utilisées, car elles permettent notamment des cadences de production élevées, tout en respectant les qualités optiques exigées par les fabricants d'automobiles. Comme les autres postes de traitements sont adjacents, le passage d'un poste à un autre s'effectue avec un minimum de pertes calorifiques. De plus, ces installations en ligne assurent une grande production avec un outillage réduit ; ainsi un squelette, ou éventuellement au plus une paire de squelettes, est utilisé pour une série de vitrages.

Pour assurer une cadence élevée de production, il faut réduire au minimum le temps de séjour des feuilles de verre dans les différentes cellules de traitement et en particulier, dans le caisson de trempe. Or si les contraintes créées dans le verre ne sont définitivement établies qu'après un refroidissement complet jusqu'à température ambiante, on constate expérimentalement que lorsque la température du verre descend en-dessous de 300°C, le risque de casse du verre en cas de manipulation est très faible.

Aussi choisit-on d'interrompre le soufflage de refroidissement dès que le verre a une température de l'ordre de 300°C, ce qui permet de libérer plus rapidement le poste de trempe. Toutefois le verre doit encore subir un refroidissement secondaire jusqu'à température ambiante avant de subir de nouvelles opérations et d'être contrôlée.

Le refroidissement du verre jusqu'à température ambiante généralement effectué à l'air libre nécessite un certain laps de temps qui est en particulier fonction de la température du vitrage directement après la trempe, de l'épaisseur du verre. Ordinairement, la durée du refroidissement secondaire n'est jamais inférieure à quelques minutes. Or, avec des unités de formage et de trempe telles que celles précédemment citées, la cadence de production atteinte est seulement de l'ordre de 3 à 4 vitrages par minute. A l'évidence, il n'est pas possible de laisser la feuille bombée trempée se refroidir sur le squelette de trempe sauf à utiliser alors un grand nombre de squelettes de trempe ce qui d'une part multiplierait les postes de réglages et d'entretien et d'autre part compliquerait singulièrement la mécanique du dispositif de convoyage des squelettes. D'ailleurs cette situation serait fort paradoxale si l'on tient compte de ce que les fours de chauffage horizontaux au travers desquels les feuilles de verre sont convoyées sur un lit de rouleaux jusqu'à leur point de ramollissement ont été justement développés pour réduire l'outillage et notamment le nombre de squelettes de bombage et de trempe nécessaires.

Il faut donc évacuer de son squelette chaque feuille de verre bombée-trempée dès que la trempe est effectuée et transférer la feuille sur un convoyeur de refroidissement secondaire dont la longueur et la vitesse sont telles que la feuille bombée-trempée est totalement re-

0216701

froidie lorsqu'elle arrive à son extrémité. Cette opération nécessite des moyens de transfert de vitrages à température moyennement élevée capables de saisir le vitrage à partir du squelette de trempe et de le déposer sur le convoyeur de refroidissement secondaire.

La solution la plus simple est le déchargement manuel par plusieurs ouvriers équipés de protections individuelles rendues nécessaires par la température du verre. Ces ouvriers sont astreints à des taches répétitives, très fréquentes et fatigantes compte tenu du niveau sonore, consécutif à la présence des souffleries du dispositif de trempe. De plus une telle décharge manuelle s'accorde mal avec une unité de production par ailleurs totalement automatisée.

Des considérations financières écartent également les dispositifs de transfert utilisés pour le manipulation de feuilles de verre froides et planes notamment les dispositifs à ventouse que comportent les dépileuses et empileuses. En effet, les ventouses traditionnelles en caoutchouc se dégradent très rapidement à des températures ici présentes, ce qui entraine leur fréquent remplacement et un risque de souillure du vitrage, il faudrait donc recourir à des ventouses fabriquées dans de nouvelles matières plastiques ultra résistantes, mais dont le prix de revient serait trop élevé.

Une solution au problème technique de l'évacuation rapide et économique du squelette de trempe par la feuille de verre bombée trempée est apportée par le brevet EP 0 003 391. Conformément à cet enseignement, le squelette de trempe porteur de la feuille bombée trempée est conduit au-dessus d'un dispositif de soufflage inférieur. La feuille est soulevée violemment par les gaz, son ascension étant limitée par des butées supérieures. La feuille de verre en position haute, le squelette de trempe se trouve libéré et peut retourner vers la cellule de formage pour récupérer la feuille suivante. Simultanément, un cadre d'évacuation vient se placer sous la première feuille qui tombe dessus dès que le soufflage est interrompu.

Une telle évacuation est très rapide, mais présente toutefois des inconvénients. Tout d'abord, les deux faces du vitrage ne sont pas refroidies de manière identique. De plus, la feuille n'étant pas maintenue latéralement ni pendant sa montée ni en position haute, elle a tendance à glisser dès lors que les gaz de soufflage ne sustentent pas de manière parfaitement symétrique les différents points de la face inférieure, c'est-à-dire dès lors que la feuille de verre présente un bombage asymétrique. Ce risque de glissement entraîne une incertitude quand à la position de la feuille et quand à sa récupération. Enfin, ce soufflage fait pénétrer des quantités importantes d'air froid à l'intérieur de la cellule de formage, car lorsque le cadre de trempe pénètre dans cette cellule, ce soufflage est toujours en cours.

La présente invention a pour but un nouveau dispositif ne présentant pas les inconvénients précités et qui permet de retirer très rapidement les feuilles de verre du cadre de trempe et de les conduire ensuite à un poste de refroidissement.

Selon l'invention, le vitrage profilé trempé est soulevé au-dessus du squelette de trempe par une dépression créée sur la face supérieure du vitrage, ce dispositif de préhension étant constitué essentiellement par des moyens d'aspiration connectés à un caisson d'aspiration présentant un fond rigide en métal, contre lequel vient s'appliquer le vitrage. Le fond est constitué par une plaque de préférence en acier inoxydable plane ou même faiblement convexe, ce qui facilite la préhension des vitrages ayant des courbures prononcées.

Après la prise en charge de la feuille de verre, le caisson est soulevé pour permettre l'évacuation du squelette de trempe. Le vitrage peut alors être conduit à un poste de refroidissement secondaire.

Selon un mode de réalisation, le passage de l'air aspiré s'effectue au travers de perforations, dont est doté le fond du caisson. Suivant un autre mode de réalisation, le fond n'est pas perforé, mais présente des dimensions légèrement inférieures à celles du caisson ce qui permet le passage de l'air aspiré à la périphérie du fond.

D'autres avantages et caractéristiques de l'invention sont décrits dans la description détaillée qui suit, faite en référence aux dessins annexés qui représentent :

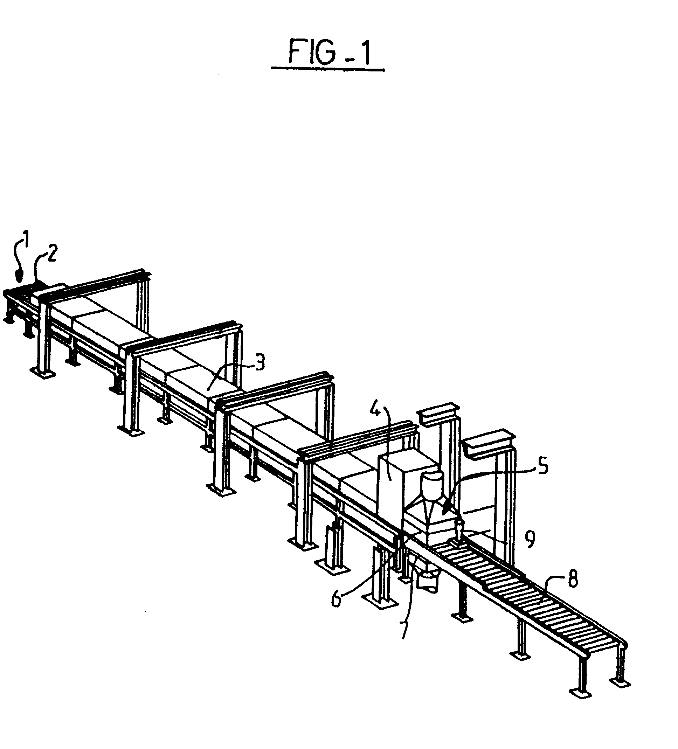

. Figure 1 : une vue générale en perspective d'une unité de formage et de trempe pour la fabrication de vitrages automobiles et comportant un dispositif d'évacuation des vitrages après leur trempe,

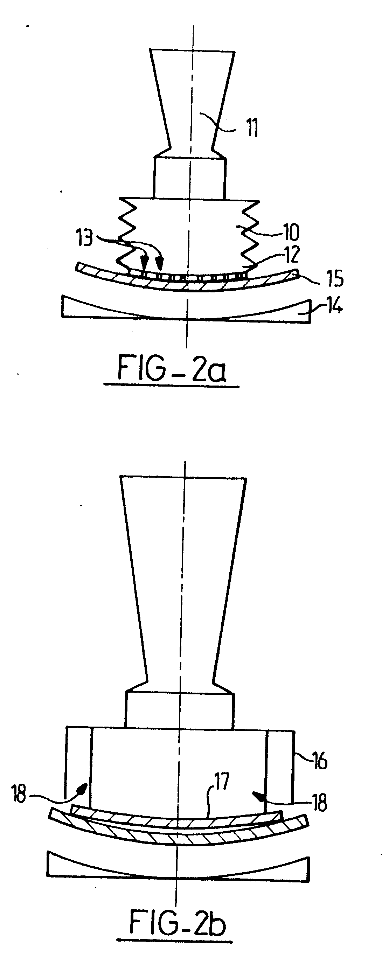

. Figures 2a et 2b : deux modes de reéalisation d'un dispositif de préhension et de transfert conforme à l'invention.

La figure 1 est une vue en perspective d'une unité de formage et de trempe de vitrages automobiles tels que des lunettes arrières, des vitres latérales, des toits ouvrants ou encore des pare-brise trempés. Cette unité comporte de gauche à droite une unité d'enfournement 1 dans laquelle les feuilles de verre sont déposées une à une sur un convoyeur 2, formé de préférence par un lit de rouleaux. L'unité d'enfournement ici représentée ne comporte pas de moyens automatiques de chargement mais de tels moyens par exemple ceux décrits dans la publication de brevet DE 3 341 207 peuvent bien entendu être utilisés pour améliorer la cadence d'enfournement. Le convoyeur 2 se prolonge dans le four 3.

Un tel four 3 horizontal, dit tunnel, permet l'échauffement progressif des feuilles de verre au delà de leur point de ramollissement c'est à dire jusqu'à une température telle que la feuille soit suffisamment souple pour être bombée. Le chauffage est obtenu au moyen de résistances électriques portées par la sole et la voûte du four. Aucun outillage autre que le convoyeur 2 n'est utilisé. La feuille de verre est simplement convoyée par le lit de rouleaux 2 qui se prolonge dans une cellule de formage 4. Celle-ci est munie également d'éléments de chauffe, telles que des résistances électriques qui permettent de maintenir la température du verre égale à la température en sortie du four soit généralement autour 650°C. La cellule de formage 4 comporte un dispositif de bombage par exemple du type décrit dans la publication de brevet FR 2 085 464. La feuille de verre est ainsi soulevée au-dessus du lit de rouleaux, épouse une forme supérieure en venant se plaquer contre celle-ci et est bombée, amenée en position haute et récupérée par un squelette de trempe qui vient se placer sous elle et conduit ensuite le vitrage profilé au poste de trempe 5. Le poste de trempe 5 est de manière bien connue constitué de deux caissons de soufflage 6, 7 se faisant face, qui comportent chacun une série de buses de soufflage dirigées vers le verre par lesquelles sont envoyés sous forte pression des jets gazeux froids. On refroidit ainsi très brutalement la feuille de verre dont les deux faces se solidifie simultanément en surface, c'est-à-dire atteignent le point de figeage du verre, proche pour les compositions de verre généralement utilisées de 550°C, avant le coeur du verre. La surface est ainsi soumise à des contraintes de compression et le coeur du verre à des contraintes d'extension. Lorsque le verre atteint une température voisine de 300°C, l'essentiel de ces contraintes estest établi. Aussi stoppe-t-on ce soufflage de gaz froids pour libérer le squelette de trempe et lui permettre de récupérer la feuille de verre suivante, qui se trouve déjà dans la cellule de formage isolée du poste de trempe par une porte coulissante, afin d'éviter que le soufflage de trempe n'entraîne un refroidissement de ladite feuille suivante avant son bombage. Pour éviter un ralentissement de la cadence de production et un séjour trop prolongé des vitrages dans la cellule de formage, il est essentiel de libérer très rapidement le squelette de trempe pour lui permettre de récupérer le vitrage suivant par un nouveau cycle.

Toutefois, à la sortie du caisson de trempe, le verre est encore à une température voisine de 300°C, cette température dépendant plus précisément de l'épaisseur du vitrage et de l'intensité du refroidissement opéré. Le vitrage doit donc subir un refroidissement secondaire, afin de stabiliser parfaitement l'état des contraintes. Pour celà, le vitrage est conduit à un poste de refroidissement secondaire, mais était donné qu'il se trouve encore à une température élevée, il ne peut être manipulé avec l'outillage usuel de manutention du verre froid. Ceci d'autant plus que cet outillage est surtout adapté à la manipulation de feuilles de verre planes alors qu'il s'agit ici de déplacer des vitrages pouvant être fortement bombés.

Selon l'invention l'évacuation du squelette de trempe par la feuille de verre bombée et le transfert de celle-ci à un poste de refroidissement secondaire 8 sont réalisés au moyen du dispositif de préhension et de transfert 9 décrit plus précisément à l'aide des figures 2a et 2b.

Le dispositif de préhension et de transfert de vitrages profilés trempés représenté à la figure 2 en coupe transversale comporte un caisson d'aspiration 10 communiquant avec des moyens d'aspiration 11, par exemple du type trompe Bertin ou mieux à base d'un ventilateur et un fond 12 de préférence en acier inoxydable. Le fond 12 est muni d'une série de perforations 13 pour le passage de l'air aspiré.

Dès qu'un squelette de trempe 14 porteur d'une feuille de verre profilée-trempée 15 vient se placer sous le dispositif de trempe et de préhension, qui est descendu par des moyens de montée-baisse à proximité immédiate du verre, la feuille de verre 15 est aspirée et vient s'appliquer contre le fond 12. De préférence, le fond est recouvert d'un tissu éventuellement en fibres réfractaires qui rend plus doux le contact entre le verre et le fond, et permet d'éviter que ne se forment des défauts de surface.

Pour permette le retrait rapide du squelette de trempe 14, dès que la feuille de verre 15 est prise en charge par le caisson, le caisson d'aspiration 10 est constitué par un soufflet en matière plastique armée. De cette façon, dès que le vitrage est au contact du fond 12, comme ici représenté, le caisson se trouve totalement obturé dans sa partie inférieure et l'aspiration entraîne la contraction du soufflet, limitée de préférences par des butées, et par conséquent la montée de la feuille de verre. Pour des feuilles de faibles concavités, la caisson au repos peut être placé suffisamment prêt du verre ce qui supprime tout recours à des moyens de montée-baisse.

Une autre variante du dispositif de préhension et de transfert selon l'invention est représentée à la figure 2b. Dans ce cas, le caisson 16 est fermé à son extrémité inférieure par une plaque 17 non perforée et de préférence en acier inoxydable. La plaque 17 est de dimensions légèrement inférieures à celles du caisson et à celles de la feuille de verre à soulever, ce qui permet un passage d'air entre le caisson 16 et la plaque 17, comme l'indiquent les flèches 18. Le vitrage est ici soulevé par la dépression créée à sa périphérie.

Si l'installation produit différents types de vitrages, les dimensions respectives du caisson et de la forme seront choisies en fonction de celles du vitrage présentant la plus faible surface, ce qui permet d'obtenir un outillage standard. Le fond 12 et la plaque 17 sont légèrement convexes dans la réalisation décrite, ce qui facilite la préhension des vitrages présentant des courbures très prononcées. Le rayon de courbure du fond est de préférence supérieur à celui du vitrage et doit donc être choisi en fonction du gabarit du vitrage le moins bombé, produit par l'installation. Pour des vitrages faiblement concaves, il est avantageux de travailler avec un fond ou une plaque plan.

Les parois verticales du caisson 16 sont constituées par des plaques métalliques, le dispositif de préhension et de transfert comprennent dans ce cas des moyens assurant la montée-baisse du caisson d'aspiration. Toutefois, il est aussi possible de réaliser un caisson 16 constitué par un soufflet en plastique armé.

Il est à noter que quelque soit la variante de réalisation du dispositif de préhension et de transfert selon l'invention, l'aspiration est quasiment instantanée. En pratique, la durée n'excède pas 1,5 seconde et est parfaitement compatible avec la cadence de formage et de trempe.

A titre indicatif, pour une feuille de verre de 3 mm, la cadence obtenue est de l'ordre de 4 vitrages à la minute, la feuille séjournant 10 secondes dans la cellule de formage et environ 6 secondes dans le poste de trempe, ce qui permet d'abaisser sa température à une température voisine de 300°C.

Le dispositif de préhension selon l'invention permet de stopper le soufflage de refroidissement dès la fin des 6 secondes nécessai-

tes à la trempe et de n'immobiliser en squelette pour l'évacuation du verre que pour 1, 5 seconde.

Pour ce qui concerne le transfert du vitrage après sa préhension et notamment sa pose sur un convoyeur de refroidissement secondaire, le dispositif de préhension et de transfert selon l'invention est avantageusement muni de moyens de translation et/ou de rotation supplémentaires qui lui confèrent différents degrés de liberté de mouvements. De cette façon, il est possible d'alimenter suivant un programme défini ou à la commande du personnel chargé du contrôle par exemple, différents convoyeurs de refroidissement secondaires.

Ainsi selon l'invention, la préhension à partir d'un squelette de trempe d'une feuille de verre ayant en surface une température élevée, et son transfert jusqu'à un poste de refroidissement secondaire sont réalisés à l'aide d'un dispositif très simple qui ne nécessite aucune adaptation des autres dispositifs, mais qui permet une plus grande automatisation de la ligne de bombage-trempe.

## REVENDICATIONS

1. Dispositif de préhension et de transfert de feuilles de verre bombées-trempées, permettant de saisir les feuilles de verre du squelette de trempe immédiatement après la trempe et de les transporter à un poste de refroidissement, caractérisé en ce qu'il comporte un caisson d'aspiration (10, 16), des moyens (11, 22) aptes à créer une dépression dans ledit caisson (10, 16), un fond (12, 17) rigide, métallique contre lequel vient s'appliquer le vitrage aspiré et des moyens qui confèrent au caisson des mouvements de translation et/ou de rotation.

2. Dispositif selon la revendication 1, caractérisé en ce que le fond (12) du caisson (10) comprend des perforations (13) permettant le passage de l'air aspiré.

3. Dispositif selon la revendication 1, caractérisé en ce que le fond imperforé (17) du caisson (16) est de dimensions inférieures à celles du caisson, afin de permettre le passage (18) de l'air aspiré entre le caisson (16) et le fond (17).

4. Dispositif suivant une des revendications précédentes, caractérisé en ce que le fond (12, 17) est plan.

5. Dispositif suivant une des revendications 1 à 3, caractérisé en ce que le fond (12, 17) est convexe.

6. Dispositif suivant une des revendications précédentes, caractérisé en ce que les parois latérales du caisson d'aspiration (10, 16) sont constituées par un soufflet en matière plastique armé.

7. Dispositif suivant une des revendications précédentes, caractérisé en ce que le fond (12, 17) est recouvert par un tissu protecteur.

8. Application du dispositif suivant une quelconque des revendications 1 à 7, à la préhension et au transfert jusqu'à un poste de refroidissement secondaire de feuilles de verre bombées-trempées dont la température en surface est inférieure au point de ramollissement du verre de l'ordre de 300°C.

## FIG - 1

FIG_2a

FIG_2b

| | Office européen des brevets | **RAPPORT DE RECHERCHE EUROPEENNE** |
|---|---|---|

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int Cl 4) |
|---|---|---|---|
| X | FR-A-2 085 464  (COMPAGNIE DE SAINT-GOBAIN) * Figures 9-14; revendications * --- | 1-3,5 | B 65 G  49/06 C 03 B  35/20 |
| A | FR-A-2 129 995  (BERTIN & CIE) * Figures 1-3; page 2 * --- | 1,4 | |
| A | FR-A-1 240 453  (SOCIETE ANONYME DES PNEUMATIQUES DUNLOP) * En entier * --- | 1,4 | |
| A | US-A-3 223 443  (MISSON) * En entier * --- | 1,4 | |
| A,D | EP-A-0 003 391  (NITSCHKE) * En entier * ----- | 1,8 | |

|  |
|---|
| DOMAINES TECHNIQUES RECHERCHES (Int Cl 4) |
| B 65 G  49/06 C 03 B  35/00 |

| | | |
|---|---|---|
| Le présent rapport de recherche a été établi pour toutes les revendications | | |
| Lieu de la recherche **LA HAYE** | Date d achèvement de la recherche **29-10-1986** | Examinateur **VAN DEN BOSSCHE W.L.** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant